Europäisches Patentamt

European Patent Office

Office européen des brevets

(11) Publication number: **0 416 781 A2**

# EUROPEAN PATENT APPLICATION

(21) Application number: 90309248.4

(22) Date of filing: 23.08.90

(51) Int. Cl.5: **H04N 5/235**, H04N 3/15

(30) Priority: 25.08.89 JP 218781/89

(43) Date of publication of application:
13.03.91 Bulletin 91/11

(84) Designated Contracting States:
DE FR GB

(71) Applicant: MATSUSHITA ELECTRIC
INDUSTRIAL CO., LTD.
1006, Oaza Kadoma
Kadoma-shi, Osaka-fu, 571(JP)

(72) Inventor: Mimura, Hidetoshi
6-13-505, Yokodai-5-chome
Isogo-ku, Yokohama-shi(JP)
Inventor: Masuda, Satoru
30-9, Tsutsujigaoka
Midori-ku, Yokohama-shi(JP)
Inventor: Hayashi, Toshihiko
34-14, Yayoidai
Izumi-ku, Yokohama-shi(JP)
Inventor: Kobayashi, Kikuo
Kamihoshikawaso D-103, 172,
Kamihoshikawacho
Hodogaya-ku, Yokohama-shi(JP)
Inventor: Sano, Toshiyuki
13-10, Tsunashimanishi-5-chome
Kohoku-ku, Yokohama-shi(JP)
Inventor: Morishita, Tadayuki
1-11-3-342, Tsumadahigashi
Atsugi-shi(JP)

(74) Representative: Votier, Sidney David et al
CARPMAELS & RANSFORD 43, Bloomsbury
Square
London WC1A 2RA(GB)

(54) An image pickup apparatus for automatically controlling image signal output level and an image pickup method.

(57) A solid-state image pickup apparatus and an image pickup method using the same for automatically controlling the level of an image signal output are featured in that the charge storage time of a solid-state image sensor (9) and the gain of an image signal amplifier (11) are controlled automatically in accordance with the magnitude of the illuminance of an object, thereby making it possible to obtain an image signal output of a constant level even when the illuminance of the object varies.

FIG. I

# AN IMAGE PICKUP APPARATUS FOR AUTOMATICALLY CONTROLLING IMAGE SIGNAL OUTPUT LEVEL AND AN IMAGE PICKUP METHOD

## BACKGROUND OF THE INVENTION

### FIELD OF THE INVENTION

The present invention relates to an image pickup apparatus and an image pickup method using a solid-state image sensor, or more in particular, to an image pickup apparatus and an image pickup method for controlling the charge storage time of an image sensor automatically in accordance with the illuminance change of an object so as to obtain an image signal output of a constant level.

### DESCRIPTION OF THE RELATED ART

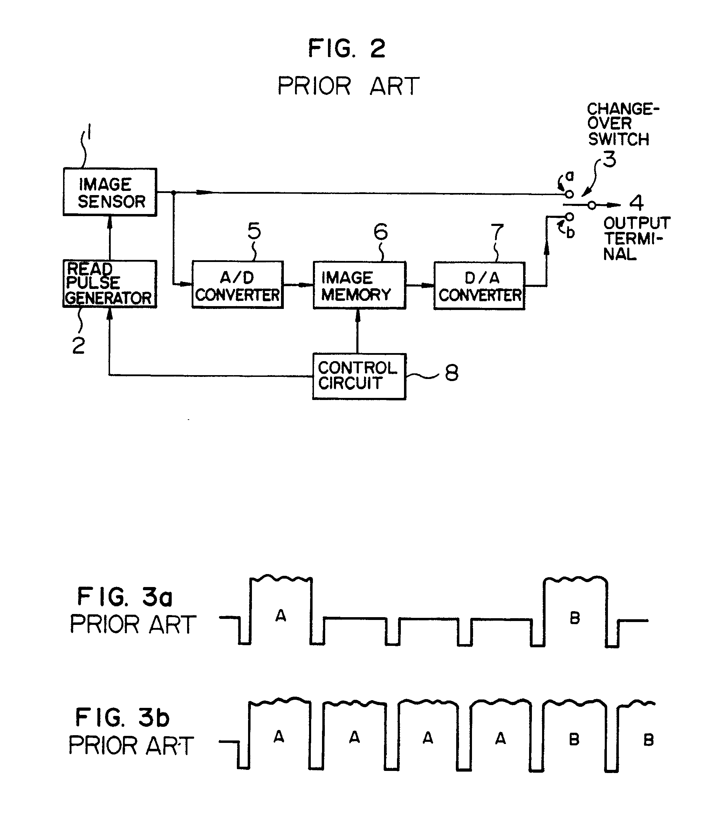

A conventional image pickup apparatus of this type shown in Fig. 2, for example, comprises a solid-state image sensor 1, a read pulse generator 2, a change-over switch 3, an A/D converter 5, an image memory 6, a D/A converter 7 and a control circuit 8. The charge storage time of photo diodes in the solid-state image sensor 1 is increased by operating the control circuit 8 thereby to elevate the sensitivity of the image pickup apparatus under a low illuminance condition (JP-A-63-256069).

The operation of the above-mentioned conventional apparatus will be described with reference to the accompanying drawings. An image signal for one picture plane is read out from the solid-state image sensor 1 in response to each read pulse produced by the read pulse generator 2. The image signal read out from the solid-state image sensor 1 is led to an output terminal 4 through a terminal a of the change-over switch 3 on the one hand, and also it is led to the A/D converter 5 on the other hand. The image memory 6 is for storing an output of the A/D converter 5, and a read-out output from the image memory 6 is applied through the D/a converter 7 to a terminal b of the change-over switch 3.

In this conventional apparatus, when reading out an image signal from the image sensor 1 every four fields, for example, by operating the control circuit 8, a read pulse is outputted from the read pulse generator 2 every four fields in synchronism with an output of the control circuit 8, thereby producing one image signal every four fields as shown in Fig. 3a. This read-out image signal is stored in the image memory 6, and the stored image signal is repeatedly read out during the three succeeding fields.

The change-over switch 3 is operated to connect its movable arm to the terminal a during the field where the image signal is read out from the image sensor 1, while, to connect its movable arm to the terminal b during the three succeeding fields. As a result, the same image signal is obtained repetitively for four fields at an output terminal 4 as shown in Fig. 3b.

With the above-mentioned configuration, the charge storage time of the solid-state image snesor 1 is increased to improve the sensitivity of the image pickup apparatus.

In the above-mentioned conventional image pickup apparatus, however, a user operates the control circuit 8 according to his own discretion, while watching an image obtained by a video camera, to control the charge storage time of the solid- state image snesor 1 so as to maintain the image signal at a constant level. As a result, there has been a problem that an extra burden other than taking a picture of an object is imposed on the user or that a video camera located at a high or distant place for the purpose of monitoring or the like requires the above-mentioned user's operation to be effected by remote control.

## SUMMARY OF THE INVENTION

The present invention intends to solve this problem of the conventional image pickup apparatus. An object of the present invention is to provide an image pickup apparatus and an image pickup method having such an excellent performance that the charge storage time of an image sensor is automatically controlled in accordance with a change of the illuminance of an object so as to obtain an image signal output of a constant level.

An image pickup apparatus according to the present invention and an image pickup apparatus used in the image pickup method according to the present invention are constructed so as to achieve the above-mentioned object, and comprise: image pickup means having a variable charge storage time; amplifier means for amplifying an output of the image pickup means to have a desired level; an image memory for storing an output of the amplifier means; selector means for selecting an output of the amplifier means or that of the image memory; output level detector means for detecting an output level of the selector means; comparator means for comparing an output of the output level detector means with a given reference level; and control means for controlling the charge storage time of the image pickup means, the write and read operations of the image memory and the operation of the selector means in accordance with a result of comparison by the comparator means.

The image pickup apparatus used in the present invention has a construction as described above. In the case of a bright object, an image signal produced from the image pickup means is amplified through the amplifier means, and the amplified image signal is transmitted through the selector means, which has been set to select the output of the amplifier means, and returns to the amplifier means via the output level detector means, thereby providing an image signal of a constant level. When the output level of the amplifier means decreases in accordance with an decrease in the illuminance of the object, this fact is detected by the output level detector means and the comparator means and is transmitted to the control means so as to set a longer charge storage time. The control means functions to control: the setting of the charge storage time and the switching timing; the driving of the read and write operations of the image memory; and the selection of the output of the image memory and the switching timing. An intermittent signal produced from the image pickup means through long-time charge storage is amplified through the amplifier means and is interpolated by the image memory, and the resultant image signal is selected by the selector means and then it is fed back to the amplifier means through the output level detector means to provide an image signal of a constant level.

With a further decrease in the illuminance of the object, the above-mentioned operation is repeated to maintain the image signal at a constant level.

While, in the case where the illuminance of the object increases, the output level detector means and the comparator means send to the control means a signal instructing that the charge storage time be set to a shorter time, and, by repeating the above operation, an image signal having a constant level is obtained. In this way, in response to the illuminance change of an object, the charge storage time can be automatically controlled to provide an image signal having an always constant level.

## BRIEF DESCRIPTION OF THE DRAWINGS

Fig. 1 is a block diagram showing an image pickup apparatus of an embodiment of the present invention.
Fig. 2 is a block diagram showing a conventional image pickup apparatus.
Figs. 3a and 3b show waveforms for explaining the operation of the apparatus shown in Fig. 2.

## DESCRIPTION OF THE PREFERRED EMBODIMENT

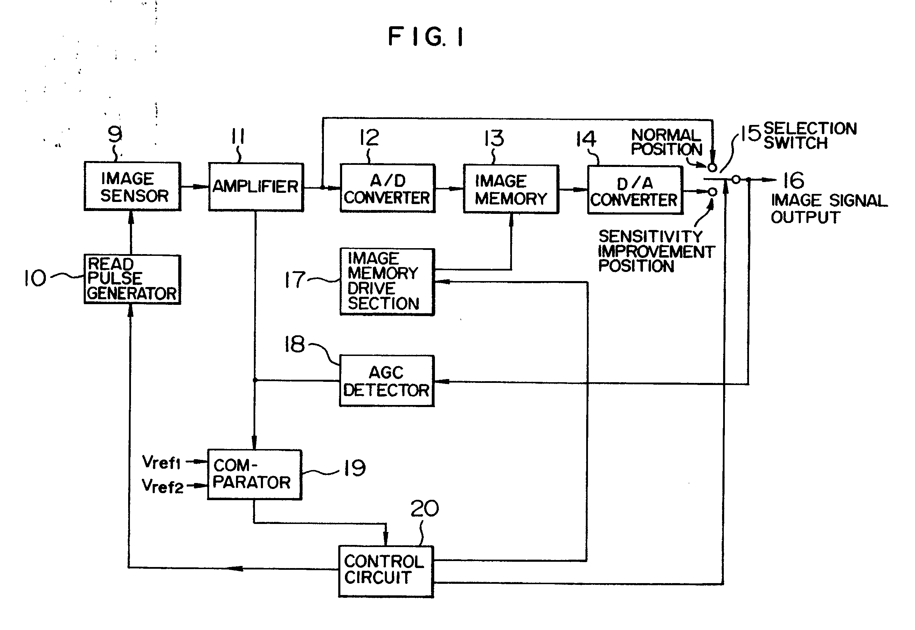

Fig. 1 shows an construction of an image pickup apparatus of an embodiment of the present invention. In Fig. 1, reference numeral 9 designates a solid-state image sensor from which an image signal for one picture plane is read out in response to an output pulse from the read pulse generator 10. Numeral 11 designates an amplifier having an AGC function which amplifies an output image signal from the image sensor 9. Numeral 12 designates an A/D converter, numeral 13 an image memory, and numeral 14 a D/A converter. The image memory 13 is connected to be located in a stage subsequent to the amplifier 11. Numeral 17 designates an image memory drive section, an output pulse of which is used to control the operation of the image memory 13 so that the image signal amplified through the amplifier 11 is written in and read out from the image memory 13. Numeral 15 designates a selection switch, and numeral 18 an AGC detector (output level detector means) made up of an integrator circuit, for example. If the switch 15 is set to select an upper normal position, a closed loop including the amplifier 11 and the AGC detector 18 is formed, while, if the switch 15 is set to select a lower position for providing improved sensitivity, a closed loop including the amplifier 11, the image memory 13 and the AGC detector 18 is formed. Numeral 19 designates a comparator for comparing the output of the AGC detector 18 with preset reference voltages. The comparator 19 is constructed so that it is provided with two preset reference voltages Vref1 and Vref2, and, when the output of the AGC detector 18 is lower than Vref2, for example, the image pickup apparatus is made to operate with improved sensitivity, while, when the output of the AGC detector 18 has a level between Vref1 and Vref2, AGC control is effected, and, when the output of the AGC detector 18 is higher than Vref1, the image pickup apparatus is made to operate with an iris (not shown) of the image sensor stopped down and so forth, in accordance with a change of the illuminance of the object. Reference numeral 20 designates a control circuit made up of a microcomputer, for example. Reference numeral 16 designates an image signal output.

Now, the operation of the image pickup apparatus of the embodiment of the present invention having the above-mentioned construction will be explained. In the case of a bright object, an image signal outputted from the image sensor 9 is amplified through the amplifier 11 so that the image signal output 16 is controlled to remain at a constant level. The selection switch 15 is, therefore, changed over to the upper (normal) position. In this case, the level of an image signal amplified through the amplifier 11 is detected by the AGC detector 18, and the gain of the amplifier 11 is controlled in accordance with a result of the level detection by the AGC detector 18, thereby maintaining the image signal output 16 always at a constant level.

When the gain of the amplifier 11 reaches its maximum value due to a reduction in the illuminance of the object, however, information as to insufficient sensitivity is produced by the comparator 19 on the basis of the output of the AGC detector 18, and this information is transmitted to the control circuit 20. The control circuit 20 operates to control a pulse width of the output pulse of the read pulse generator 10 thereby to increase the charge storage time of the image sensor 9 to be doubled, for example, while, at the same time, controlling the image memory drive section 17 to make the image memory 13 write in and read out an intermittent signal resulting from the long charge storage time of the image sensor 9. Further, the control circuit 20 controls the switch 15 to be changed over to the lower position (the sensitivity improvement position). Subsequently, the AGC detector 18 detects a level of the image signal output 16 on the basis of the image signal interpolated by the image memory 13 and controls the gain of the amplifier 11, thereby maintaining the image signal output 16 always at a constant level.

If the gain of the amplifier 11 reaches its maximum value again due to a further reduction in the illuminance of the object, the control circuit 20 reads the information sent from the comparator 19 and controls the pulse width of the output pulse of the read pulse generator 10 thereby to extend the time length of the charge storage time of the image sensor 9 to be quadrupled, for example.

On the other hand, in the case where the gain of the amplifier 11 reaches its minimum value due to an increase in the illuminance of the object, the control circuit 20 reads the information sent from the comparator 19 and controls the pulse width of the output pulse of read pulse generator 10 to reduce the charge storage time of the image sensor 9 from the quadruple value to the double value, for example.

In this way, according to the aforementioned embodiment, the charge storage time, that is, the rate or degree of sensitivity improvement is automatically controlled in accordance with the magnitude of the illuminance of the object, whereby the image signal output can always be kept at a constant level.

It will thus be understood from the foregoing description of the embodiment of the present invention that the image pickup apparatus and the image pickup method of the present invention permits the charge storage time, that is, the rate or degree of sensitivity improvement and the gain of the amplifier to be automatically controlled, thereby providing an excellent advantage such that an output image signal of an always constant level can be obtained in spite of a change of the illuminance of an object.

## Claims

1. An image pickup apparatus for controlling an image signal output level automatically, comprising: image pickup means (9); amplifier means (11) for amplifying an output of the image pickup means (9) to have a desired level; and output level detector means (18) for detecting an output level of the amplifier means (11), whereby an amplification degree of the amplifier means (11) is controlled by an output of the output level detector means (18) and an image signal output is provided by an output of the amplifier means (11).

2. An image pickup apparatus according to Claim 1, wherein the image pickup means (9) is of the type of variable charge storage time, and said image pickup apparatus further comprises: storage means (13) for storing an output of the amplifier means (11); selector means (15) for selecting one of an output of the amplifier means (11) and an output of the storage means (13); comparator means (19) for comparing an output of the output level detector means (18) with at least one preset reference level; and control means (20) for controlling the length of the charge storage time of the image pickup means (9), the writing and reading operations in and from the storage means (13), respectively, and the selection by the selector means (15).

3. An image pickup apparatus according to Claim 2, wherein the length of the charge storage time of the image pickup means (9) is controlled to be increased by the control means (20) when the illuminance of an object decreases.

4. An image pickup apparatus according to Claim 2, wherein the length of the charge storage time of the image pickup means (9) is controlled to be decreased by the control means (20) when the illuminance of an object increases.

5. An image pickup apparatus according to Claim 2, further comprising a read pulse generator (10) for outputting a read pulse for controlling an operation of reading an image signal from the image pickup means (9), whereby the length of the charge storage time of the image pickup means (9) is controlled by changing the width of the read pulse outputted from the read pulse generator (10) by an output signal of the control means (20).

6. An image pickup apparatus according to Claim 2, wherein the storage means is composed of an A/D converter (12), an image memory (13) and a D/A converter (14).

7. An image pickup apparatus according to Claim 6, wherein the operations of writing and reading an intermittent signal in and from the image memory (13), respectively, are driven by image memory drive means (17) interposed between the image memory (13) and the control means (20).

8. An image pickup apparatus according to Claim 1, wherein the output level detector means (18) is composed of an integrator circuit.

9. An image pickup apparatus according to Claim 2, wherein the comparator means (19) is provided with a plurality of reference voltages.

10. An image pickup apparatus according to Claim 2, wherein the selectable positions of the selector means (15) include a normal position connected to the output of the amplifier means (11) and an sensitivity improvement position connected to the output of the storage means (13), a closed loop being formed to include the amplifier means (11) and the output level detector means (18) when the normal position is selected, while, a closed loop being formed to include the amplifier means (11), the storage means (13) and the output level detector means (18) when the sensitivity improvement position is selected.

11. An image pickup method using an image pickup apparatus for controlling an image signal output level automatically,

wherein said image pickup apparatus comprises image pickup means (9), amplifier means (11) for amplifying an output of the image pickup means (9) to have a desired level, output level detector means (18) for detecting an output level of the amplifier means (11) and controlling an amplification degree of the amplifier means (11), storage means (13) for storing an output of the amplifier means (11), selector means (15) for selecting one of an output of the amplifier means (11) and an output of the storage means (13), comparator means (19) for comparing an output of the output level detector means (18) with at least one preset reference level, and control means (20) for controlling the length of the charge storage time of the image pickup means (9), the writing and reading operations in and from the storage means (13), respectively, and the selection by the selector means (15),

said image pickup method comprising the steps of:
(a) producing an image signal output of a constant level when an object has normal illuminance, in which an image signal outputted from the image pickup means (9) is amplified through the amplifier means (11), transmitted through the selector means (15) which has been set to select the output of the amplifier means (11), and is fed back to the amplifier means (11) via the output level detector means (18); and
(b) maintaining an image signal output at a constant level even when the illuminance of an object changes, in which the change of the illuminance of the object is detected by the output level detector means (18) and the comparator means (19), the resulting information of detection is transmitted to the control means (20) which operates to control the setting of the charge storage time of the image pickup means (9) so as to compensate for the change of the illuminance of the object, the drive of the writing and reading operations in and from the storage means (13), respectively, and the selection by the selector means (15), and then the output level detector means (18) operates to control the amplification degree of the amplifier means (11).

12. An image pickup method according to Claim 11, wherein the control means (20) controls to decrease the length of the charge storage time of the image pickup means (9) when the magnitude of the illuminance of the object increases.

13. An image pickup method according to Claim 11, wherein the control means (20) controls to increase the length of the charge storage time of the image pickup means (9) when the magnitude of the illuminance of the object decreases.

# F I G. I

## FIG. 2
### PRIOR ART

## FIG. 3a
PRIOR ART

## FIG. 3b
PRIOR ART